# FASCICULE DE BREVET EUROPEEN

(11) **EP 0 870 570 B1**
(45) Date de publication et mention de la délivrance du brevet: **29.01.2003**
(21) Numéro de dépôt: 98420055.0
(22) Date de dépôt: 25.03.1998
(51) Int. Cl.: B23K 26/00

(54) **Procédé de soudage d'appendices sur un tube de vérin**
Verfahren vor Anschweissen von Ansatzteilen an einem Zylinderrohr
Process of welding attachments onto a ram tube

(30) Priorité: 07.04.1997 FR 9704437
(43) Date de publication de la demande: 14.10.1998
(73) Titulaire: Société de Mécanique d'Irigny, 69540 Irigny (FR)
(72) Inventeur: Suchier, Nicolas, 69007 Lyon (FR)
(74) Mandataire: Bratel, Gérard

(56) Documents cités:
- EP-A- 0 303 074
- EP-A- 0 672 496
- US-A- 4 477 010
- US-A- 4 732 086
- US-A- 5 142 118
- US-A- 5 231 261
- PATENT ABSTRACTS OF JAPAN vol. 13, no. 136 (E-737), 5 avril 1989 & JP 63 299753 A (MITSUBISHI ELECTRIC CORP), 7 décembre 1988,

## Description

La présente invention concerne un procédé de soudage d'appendices sur un tube de vérin conformément au préambule de la revendication 1 (voir US-A-4 477 010). Cette invention concerne plus particulièrement, quoique non exclusivement, le soudage d'appendices, tels que pattes de fixation et pattes de reprise d'effort, sur un tube de vérin appartenant à une direction assistée hydraulique de véhicule automobile.

Une direction assistée hydraulique est composée, entre autres, d'un vérin à double effet permettant la démultiplication de l'effort manuel au volant. Le vérin possède un tube qui délimite son corps, et qui a en outre pour fonctions de lier la direction assistée avec le berceau du véhicule et de servir de support à divers composants, tels qu'écran thermique, élément support de tuyauterie, patte de reprise d'effort, etc... Ainsi, un certain nombre d'appendices sont habituellement fixés sur le tube de vérin, en divers points de celui-ci, les appendices en question pouvant être des pattes de fixation, des pattes de reprise d'effort, etc...

Le tube de vérin lui-même est obtenu à partir d'une ébauche en acier à faible teneur en carbone, étirée à froid. Cette technique permet d'associer une forte productivité avec les caractéristiques suivantes :
- Diamètre extérieur du tube de qualité "H11" soit + 0/-0,16 mm
- Diamètre extérieur du tube de qualité "h9" soit +0,062/-0 mm.

Pour l'assemblage d'appendices sur un tel tube de vérin, les procédés les plus couramment employés sont les suivants :
- Soudage avec métal d'apport (procédé "MIG" ou "TIG").
- Soudage par résistance.
- Surmoulage d'aluminium.
- Assemblage par brides et serrage.

Les trois premiers procédés ont, pour inconvénient commun, l'impossibilité de maîtriser la déformation intérieure du tube, laquelle peut être comprise entre 0,05 mm et plusieurs dixièmes de mm, ce qui rend nécessaire un usinage ultérieur de l'intérieur du tube. Si cet usinage se situe dans la zone de déplacement du piston du vérin, il consiste nécessairement en une opération de rodage, qui est longue (le temps de cycle étant de 1 à 4 minutes) donc coûteuse, et qui s'intègre ainsi difficilement à une production en ligne.

L'assemblage par brides et serrage n'est pas directement concerné par ces inconvénients, mais il ne constitue pas un assemblage complètement rigide.

Une autre solution connue, plus éloignée des précédentes, consiste en un tube ou un carter/tube en aluminium moulé, qui intègre tous les appendices mais qui implique des usinages délicats et un coût final relativement peu compétitif.

Des procédés de soudure laser sont déjà connus, par exemple par les documents JP 63 299753A, US 5142118A, EP 0303074A et US 4732086A. Ces procédés ne sont pas appliqués au soudage local d'appendices sur des tubes, et ils ne visent pas la maîtrise de la déformation intérieure de tubes. Dans le cas de procédés déjà appliqués au soudage d'éléments sur des corps cylindriques, tels que décrits dans le premier et le dernier des quatre documents précités, les soudures s'étendent essentiellement le long de génératrices de la surface de ces corps cylindriques, et non pas sur un secteur appréciable de ladite surface.

Le document US 4477010 A, considéré comme représentant l'état de la technique le plus proche, décrit déjà un procédé pour le soudage d'appendices, tels que des pattes de fixation, sur un tube de vérin. Ce procédé consiste à assembler un appendice sur la surface extérieure du tube de vérin, par soudage laser effectué dans la zone de contact circonférentielle entre l'appendice et la surface cylindrique extérieure du tube de vérin. Le soudage est ici effectué suivant un secteur total important de ladite surface cylindrique, compte tenu de la forme particulière de l'appendice. De plus, l'appendice est serré élastiquement sur le tube de vérin, avec risque de déformation de ce tube.

La présente invention vise à résoudre les problèmes actuellement posés par l'assemblage d'appendices sur un tube de vérin, en fournissant un procédé de soudage qui évite toutes déformation du tube, tout en possédant une relative simplicité de mise en oeuvre, un coût très acceptable et une compatibilité avec l'intégration dans une ligne de production.

A cet effet, l'invention a pour objet un procédé de soudage d'appendices sur un tube de vérin, le procédé consistant essentiellement à assembler au moins un appendice sur la surface cylindrique extérieure du tube de vérin par soudage laser, effectué dans la zone de contact circonférentielle entre un appendice et la surface cylindrique extérieure du tube de vérin, suivant un secteur de cercle prédéterminé de ladite surface, ledit secteur de soudage, correspondant à la zone de contact entre un appendice et la surface cylindrique extérieure du tube de vérin, est limité, dans le sens circonférentiel, à une valeur maximale d'environ 120 °, le soudage de chaque appendice étant réalisé à l'aide de deux faisceaux laser dirigés de part et d'autre de l'appendice à souder.

La solution faisant l'objet de la présente invention repose ainsi sur une technique de soudage, à savoir le soudage laser, qui apporte une densité d'énergie importante, donc concentrée et en un minimum de temps, ceci permettant de limiter au maximum la zone affectée thermiquement et, par conséquent, d'éviter toute déformation du tube de vérin. L'invention rend ainsi inutile tout usinage ultérieur, par rodage, de l'intérieur du tube. Le nombre d'opérations à effectuer sur les tubes de vérin en cours de fabrication est ainsi réduit, et il peut passer de dix opérations (avec les solutions de soudage classique ou de surmoulage d'aluminium) à huit opérations. Le flux des pièces dans les lignes d'usinage peut aussi être simplifié, en conséquence de ce qui précède.

A cet égard, une condition indispensable pour obtenir une soudure laser correcte, et ainsi assurer la tenue mécanique de l'assemble, est de garantir, entre les pièces à assembler, un jeu maximum inférieur à 0,15 mm. Or la surface cylindrique extérieure du tube est de qualité "H11" (soit +0/-0,16 mm), comme déjà indiqué plus haut, et les appendices habituellement obtenus par découpe ont une tolérance de forme de 0,2 mm. Ces considérations conduisent à limiter la zone de contact à un secteur d'environ 120°, qui est largement suffisant en égard aux sollicitations imposées à une direction assistée. Dans le cas de pattes encerclant le tube, la condition relative à la valeur de secteur limitée à 120° peut toujours être respectée, en réalisant de telles pattes en deux parties, par exemple avec une partie inférieure directement soudée sur le tube par le procédé de l'invention, et une partie supérieure réalisée sous la forme d'un cavalier, non soudé sur le tube mais fixé sur la partie inférieure de la patte. Le soudage suivant un secteur donné, par exemple de 120° en prenant la valeur maximum ici préconisée, est contrôlable en pratique au moyen d'un axe numérique.

Selon une autre caractéristique avantageuse de l'invention, il est prévu que le faisceau laser, dirigé vers la zone de contact entre un appendice et la surface cylindrique extérieure du tube de vérin, forme un angle compris entre 15° et 75° avec la direction de l'axe longitudinal dudit tube. Le choix de cet angle détermine la profondeur de soudage, qui doit être de 1±0,2 mm afin d'obtenir, sur la paroi intérieure du tube, une déformation inférieure à 0,01 mm, tout en assurant une tenue mécanique correcte de l'assemblage.

De préférence, le laser utilisé pour la mise en oeuvre du procédé de l'invention est un laser à source Nd/YAG, cette solution représentant le meilleur compromis coût-productivité-encombrement-flexibilité-simplicité.

Il est rappelé que le principe de fonctionnement d'une source laser est basé sur l'action de décharges électriques ou lumineuses sur une cavité remplie d'un milieu actif gazeux ou solide, dans lequel prend naissance le faisceau laser, c'est-à-dire une onde électromagnétique possédant plusieurs propriétés caractéristiques : monochromaticité, polarisation permettant une transmission de lumière avec un minimum de pertes dans la direction de polarisation donnée, cohérence autorisant la focalisation du faisceau sur de très petites surfaces, et directivité rendant le faisceau filiforme.

Dans le cas du laser à source Nd/YAG, les décharges sont de type lumineuses (lampes flash), et elles excitent un milieu actif solide constitué par un cristal composé d'atomes d'oxygène, d'aluminium et d'ytrium, dopé au niobium. La longueur d'onde du faisceau laser, prenant naissance dans ce cristal, se situe dans l'infrarouge proche et est de 1,06 µm, ce qui permet de véhiculer le faisceau laser dans une fibre optique.

Pour réaliser le soudage à l'aide d'un tel faisceau laser, de fortes densités d'énergie sont en outre exigées, ce qui est réalisable en travaillant à proximité du point focal d'un système optique. Pour des puissances spécifiques suffisamment élevées (100000 à 1000000 W/cm²), il apparaît dans le matériau, au point d'impact du faisceau laser, un "capillaire" c'est-à-dire une cavité remplie de vapeurs ionisées à très haute température, ce qui permet un transfert direct de l'énergie du faisceau laser dans le matériau, au contraire des procédés conventionnels (soudage électrique, soudage à la flamme,...) qui sont caractérisés par un apport de l'énergie en surface. Ceci permet de réduire de manière considérable la zone affectée thermiquement, et ainsi de souder les appendices en contrôlant parfaitement la profondeur de pénétration, donc la déformation du tube, ce qui est précisément le résultat recherché par l'invention.

De toute façon, l'invention sera mieux comprise à l'aide de la description qui suit, en référence au dessin schématique annexé illustrant ce procédé de soudage d'appendices sur un tube de vérin, et représentant, à titre d'exemple, un dispositif pour la mise en oeuvre de ce procédé :
Figure 1 est une vue de face d'un tube de vérin de direction assistée et des appendices fixés sur ce tube ;
Figure 2 est un schéma de principe illustrant l'opération de soudage d'un appendice sur le tube de vérin, non couvert par les revendications ;
Figure 3 est une vue en bout du tube de vérin pourvu d'un appendice soudé, non couvert par les revendications ;
Figure 4 est une vue en plan d'un poste de travail prévu pour le soudage d'appendices sur des tubes de vérin.

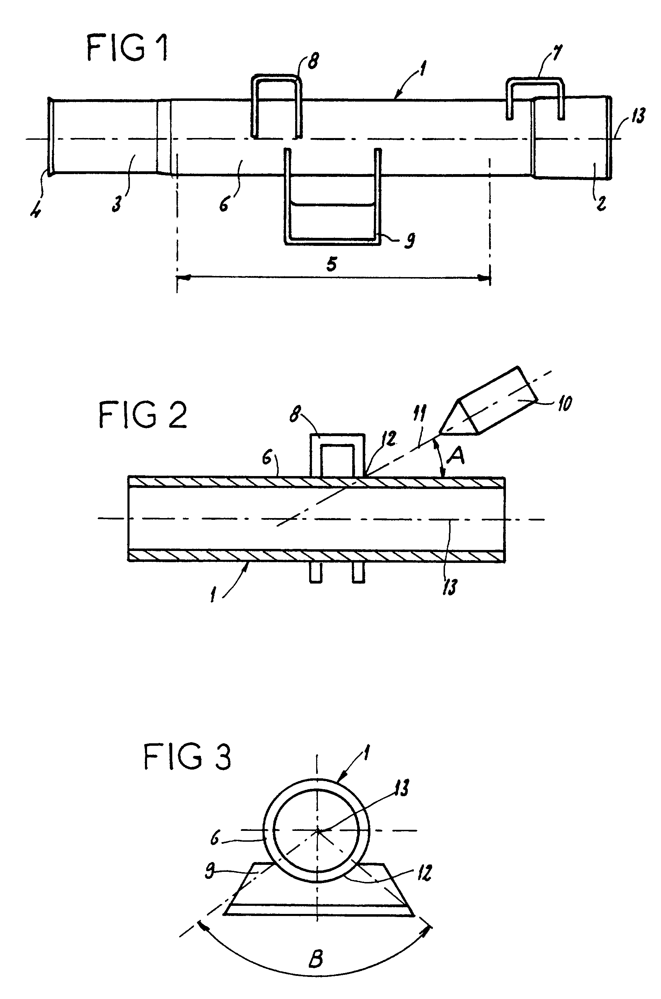

Les modes de réalisation représentés par les Figures 2 et 3 ne sont pas couverts par les revendications.

La figure 1 montre un tube de vérin 1, appartenant à une direction assistée hydraulique dont les autres parties ne sont pas représentées. Le tube de vérin 1 possède par exemple une première extrémité évasée 2, et une deuxième extrémité avec rétreint 3 et tulipage 4, entre entre lesquelles se situe une zone médiane 5 de déplacement en translation du piston du vérin. Divers "appendices" sont assemblés sur la surface cylindrique extérieure 6 du tube 1, en particulier dans la zone médiane 5 de déplacement du piston, ces appendices pouvant notamment comprendre une patte de fixation 7, une patte de reprise d'effort 8, et une patte de support 9 pour le moteur du véhicule concerné.

Chacune des pattes 7, 8 et 9 est fixée contre la surface cylindrique extérieure 6 du tube de vérin 1 par une technique de soudage laser. Un laser 10 avec source Nd/YAG émet un faisceau 11, qui est dirigé vers la zone de contact 12 entre la patte à souder, telle que la patte de reprise d'effort 8, et la surface cylindrique extérieure 6 du tube 1. Le faisceau laser 11 forme, avec la direction de l'axe longitudinal 13 du tube 1, un angle A qui est compris entre 15° et 75°, l'angle A étant choisi en fonction de la précision possible d'accostage et de la profondeur de pénétration souhaitée.

A titre d'exemple, les appendices à souder tels que la patte 8 possèdent une épaisseur de 2 à 3,5 mm, tandis que l'épaisseur du tube de vérin 1 est comprise entre 2,5 et 2,75 mm. Pour une source Nd/YAG continue, la puissance du laser 10 peut être de 2KW, sa focale étant comprise entre 100 et 200 mm. La dimension de la zone touchée par le faisceau laser est de l'ordre de 0,6 mm, et la vitesse de soudage peut être supérieure à 4 m/minute.

Pour obtenir une soudure correcte, compte tenu des tolérances dimensionnelles sur la surface cylindrique extérieure 6 du tube 1 et sur les appendices tels que la patte de support 9, la zone de contact 12 entre cette patte 9 et le tube 1 est limitée, dans le sens circonférentiel, à un secteur B d'environ 120°, comme montré sur la figure 3.

Pour les dimensions du tube de vérin 1 indiquées ci-dessus, la profondeur de soudage doit être de 1±0,2 mm, afin d'obtenir une déformation intérieure du tube 1 inférieure à 0,01 mm tout en assurant une tenue mécanique correcte des appendices soudés tels que les pattes 7, 8 et 9.

Bien entendu, l'opération de soudage laser illustrée schématiquement par la figure 2 est répétée sur les deux côtés de chaque patte 7, 8 et 9.

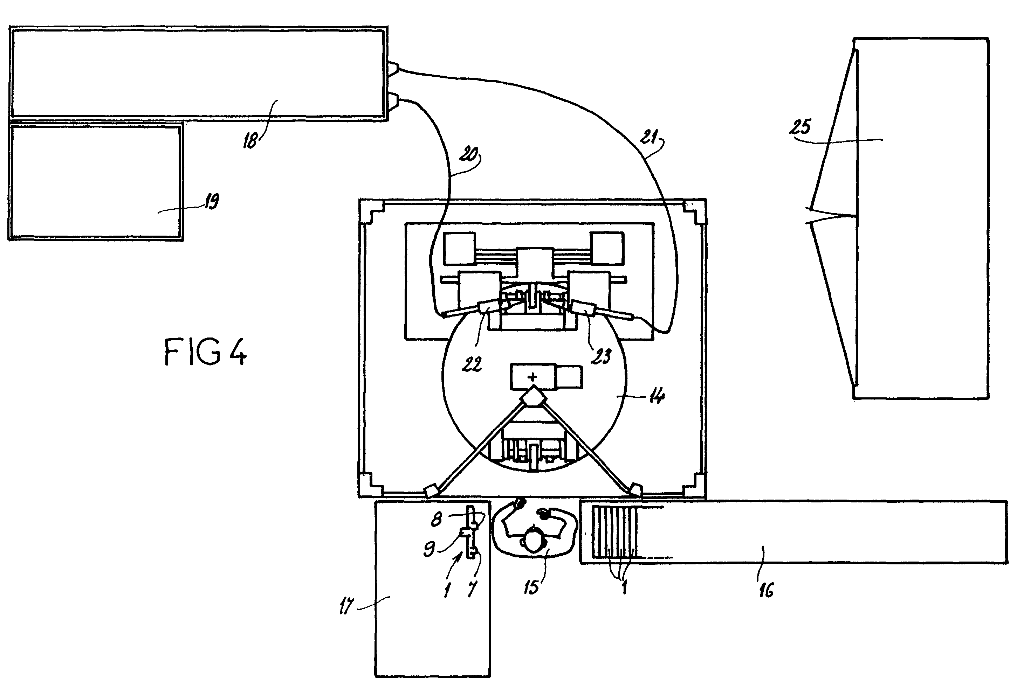

La figure 4 montre un poste de travail inséré dans une ligne de fabrication industrielle, et spécialement conçu pour la mise en oeuvre du procédé de soudage objet de l'invention. Le poste de travail comprend un plateau tournant 14, et sur un côté de ce poste se tient un opérateur 15 qui effectue le chargement sur le plateau 14 des tubes 1, amenés par un convoyeur 16. L'opérateur effectue aussi le chargement et le bridage des appendices, prélevés dans des magasins de stockage, ainsi que l'évacuation, dans un conteneur 17, des tubes pourvus de leurs appendices soudés.

La machine de soudage proprement dite comprend un laser 18 avec groupe refrigérant 19, et deux fibres optiques 20, 21 aboutissant à deux têtes de focalisation respectives 22, 23, qui dirigent les faisceaux laser de part et d'autre de chaque patte à souder sur un tube 1. Grâce à des dispositifs indiqués globalement en 24, les deux têtes de focalisation 22, 23 sont rendues mobiles en translation parallèlement à l'axe du tube amené par le plateau tournant 14 en position de soudage. D'autres moyens, non représentés, commandent un mouvement de rotation relatif des deux têtes 22, 23 et du tube 1, autour de l'axe de ce dernier, sur un angle qui correspond au secteur B. Le poste de travail comprend encore une armoire électrique 25.

L'invention reste naturellement applicable quels que soient le nombre et la nature des appendices à souder sur le tube de vérin, et quelle que soit la destination du vérin.

## Revendications

1. Procédé de soudage d'appendices (7,8,9), tels que pattes de fixation et pattes de reprise d'effort, sur un tube de vérin (1) et plus particulièrement un tube de vérin appartenant à une direction assistée hydraulique de véhicule automobile, le procédé consistant à assembler au moins un appendice (7,8,9) sur la surface cylindrique extérieure (6) du tube de vérin (1) par soudage laser, effectué dans la zone de contact circonférentielle (12) entre un appendice (7,8,9) et la surface cylindrique extérieure (6) du tube de vérin (1), suivant un secteur de cercle (B) prédéterminé de ladite surface (6), **caractérisé en ce que** le secteur de soudage (B), correspondant à la zone de contact (12) entre un appendice (7,8,9) et la surface cylindrique extérieure (6) du tube de vérin (1), est limité, dans le sens circonférentiel, à une valeur maximale d'environ 120°, et **en ce que** le soudage de chaque appendice (7,8,9) est réalisé à l'aide de deux faisceaux laser (11) dirigés de part et d'autre de l'appendice à souder.

2. Procédé selon la revendication 1, **caractérisé en ce que** chaque faisceau laser (11), dirigé vers la zone de contact (12) entre un appendice (7,8,9) et la surface cylindrique extérieure (6) du tube de vérin (1), forme un angle (A) compris entre 15° et 75° avec la direction de l'axe longitudinal (13) dudit tube (1).

3. Procédé selon la revendication 1 ou 2, **caractérisé en ce que** le laser (10;18) utilisé est un laser à source Nd/YAG.

## Patentansprüche

1. Verfahren zum Schweißen von Ansätzen (7, 8, 9) wie Befestigungsklammern und Klammern zur Kraftaufnahme an ein Zylinderrohr (1) und insbesondere an ein Zylinderrohr, das zu einer hydraulischen Kraftfahrzeugservolenkung gehört, wobei das Verfahren darin besteht, mindestens einen Ansatz (7, 8, 9) auf der zylindrischen Außenoberfläche (6) des Zylinderrohrs (1) durch Laserschweißung anzubringen, die im umlaufenden Kontaktbereich (12) zwischen einem Ansatz (7, 8, 9) und der zylindrischen Außenoberfläche (6) des Zylinderrohrs (1) entlang eines vorbestimmten Kreisausschnitts (B) der Oberfläche (6) durchgeführt wird, **dadurch gekennzeichnet, dass** der Schweißausschnitt (B), der dem Kontaktbereich (12) zwischen einem Ansatz (7, 8, 9) und der zylindrischen Außenoberfläche (6) des Zylinderrohrs (1) entspricht, in der Umfangsrichtung auf einen Höchstwert von ca. 120° beschränkt ist, und dass das Anschweißen jedes Ansatzes (7, 8, 9) mittels zweier Laserstrahlen (11) bewerkstelligt wird, die auf beide Seiten des anzuschweißenden Ansatzes gerichtet sind.

2. Verfahren nach Anspruch 1, **dadurch gekennzeichnet, dass** jeder Laserstrahl (11), der zum Kontaktbereich (12) zwischen einem Ansatz (7, 8, 9) und der zylindrischen Außenoberfläche (6) des Zylinderrohrs (1) hin gerichtet ist, einen winkel (A) von 15° bis 75° mit der Richtung der Längsachse (13) des Rohrs (1) bildet.

3. Verfahren nach Anspruch 1 oder 2, **dadurch gekennzeichnete dass** der verwendete Laser (10; 18) ein Laser mit einer Nd/YAG-Quelle ist.

## Claims

1. Method of welding attachments (7, 8, 9), such as mounting tabs and force-transmitting brackets, onto a cylinder tube (1), and more particulare a cylinder tube belonging to a hydraulic power-assist steering system of a motor vehicle, the method comprising the step of fixing at least one attachment (7, 8, 9) against the cylindrical outer surface (6) of the cylinder tube (1) by laser welding, carried out in the circumferential contact area (12) between an attachment (7, 8, 9) and the cylindrical outer surface (6) of the cylinder tube (1), along a predetermined circle sector (B) of said surface (6), **characterised in that** the welding sector (B) corresponding to the contact area (12) between an attachment (7, 8, 9) and the cylindrical outer surface (6) of the cylinder tube (1) is circumferentially limited to a value which is at most about 120°, and **in that** the welding of each attachment (7, 8, 9) is carried out by means of two laser beams (11) directed at each of both sides of the attachment to be welded.

2. Method according to claim 1, **characterised in that** each laser beam (11), which is directed at the contact area (12) between an attachment (7, 8, 9) and the cylindrical outer surface (6) of the cylinder tube (1), is oriented at an angle (A) which lies between 15° and 75° to the direction of the longitudinal axis (13) of said tube (1).

3. Method according to claim 1 or 2, **characterised in that** the laser (10 ; 18) which is used is a laser with Nd/YAG source.
